# EUROPEAN PATENT APPLICATION

(11) **EP 4 727 080 A1**
(43) Date of publication of application: **15.04.2026**
(21) Application number: 25208154.2
(22) Date of filing: 10.10.2025
(51) Int. Cl.: H04L 41/122, H04L 41/0253, H04L 41/22, H04L 41/0806, H04L 43/08, H04L 43/06, H04L 41/0895, H04L 41/14, H04L 43/0852, H04L 43/0894, H04L 43/20

(54) **NETWORK SIMULATION DEVICE**

(30) Priority: 11.10.2024 EP 24206270
(71) Applicant: Platinum Training Services Limited, Poole BH15 3TB (GB)
(72) Inventor: RADFORD, Kenneth Mark, Poole, BH15 3TB (GB); RADFORD, Matthew James, Poole, BH15 3TB (GB); SANDALLS, Jamie Lee Robert, Poole, BH15 3TB (GB); PARSONSON, Stephano, Derby, DE3 0PF (GB); TURNER, Daniel, London, WC2H 9JQ (GB)
(74) Representative: The IP Asset Partnership Limited

(57) **Abstract**

The present invention provides a system (200,300,400) comprising a network builder (226) for generating a virtual network system within a first network container (230), in which the first network container (230) comprises the virtual network system, generated by the network builder (226) and accessed via a browser interface (250). The virtual network system comprising two or more virtual end devices (234) and two or more virtual intermediary network devices (232) for receiving and sending data between the two or more virtual end devices (234). Also included is an end user device (260) comprising the browser interface (250) and for receiving inputs from a user. The arrangement is such that the inputs from the user comprise at least one command for at least one virtual device (234) of the virtual network system. Also provided is a performance monitoring module (228) for monitoring the performance of the virtual network system and an output device (240) for outputting a score associated with the virtual network system (200,300,400) based on the performance of the virtual network system (200,300,400).

## Description

### Field

The present invention relates to network simulations. More particularly, the present invention relates to a system for generating and accessing a virtual network system.

### Background

Simulations of networks use software to replicate the behaviour of a real network. For example, interactions between network entities such as end devices, routers, switches, links may be modelled and analysed. Such simulations help to understand how real networks would behave in certain environments, given certain instructions or protocols.

Currently, network simulations deploy virtual devices (such as virtual switches) that have a real operating system running on top of them.

This approach is sub-optimal because the virtual devices themselves withhold CPU cores, memory and storage from the device they are deployed on, restricting other applications from using them. In other words, they are very resource intensive. Further, real operating systems (such as a real switch operating system) operate using a large list of processes and modules. Many of these are applicable only to real, or production-ready networks. These processes and modules are often superfluous to the scope required to operate a virtual device in a simulation and use unnecessary resources.

Additionally, each virtual device is modelled independently in current network simulations, which means that they behave as a single self-sufficient device. Consequently, each device has limited awareness of other devices connected to it. For example, such systems may not be able to accurately assess the efficiency of a large or complex network of devices, as information about settings and configurations is not available globally across the network. In fact, sharing such information globally would cause additional traffic and expose data to malicious activity.

As a result, network simulations are typically limited to three to four virtual devices running simultaneously on a typical home computer, before latency causes a poor user experience. Running such a simulation on a home computer also may impact the functioning of other applications installed on that device. It is therefore difficult to scale-up training on networks, or to test out different network protocols to maximise efficiency.

In summary, existing network simulation systems are very resource intensive, and therefore cannot accurately model larger or more complex network systems.

The present invention seeks to address these, and other disadvantages encountered in the prior art by providing an improved system for building a network simulation and assessing its performance.

### Summary of Invention

Aspects and/or embodiments seek to provide an improved network simulation device and method of operation.

According to a first aspect, there is provided a system comprising: a network builder for generating a virtual network system within a first network container in which the first network container comprising the virtual network system, generated by the network builder and accessed via a browser interface, the virtual network system comprising two or more virtual end devices and two or more virtual intermediary network devices for receiving and sending data between the two or more virtual end devices; an end user device comprising the browser interface and for receiving inputs from a user; wherein the inputs from the user comprise at least one command for at least one virtual device of the virtual network system; a performance monitoring module for monitoring the performance of the virtual network system and an output device for outputting a score associated with the virtual network system based on the performance of the virtual network system.

The virtual intermediary network devices may be virtual network switches, and/or virtual network routers, and/or virtual network storage devices.

Each virtual network switch device may be connected to one or more of the virtual end devices.

The system may further comprise or include a second virtual network system, and wherein the second virtual network system is generated within a second network container by the network.

The system may still further comprise or include a frame manager for processing a queue of frames generated by the virtual devices of the virtual network system.

In one arrangement the system further comprises or includes a job queue for receiving instructions from the frame manager and delivering frames to at least one virtual device of the virtual network system.

The job queue may further be configured to receive instructions from a second frame manager in the second network container and deliver frames to at least one virtual device of the second virtual network system.

The system may further comprise or include a modular interface including at least one of: a command line interface and/or a graphical user interface for receiving user inputs.

The modular interface may be accessed via the browser interface of the end user device.

The performance monitoring module may be configured to determine latency of at least one of: the frame manager and/or the job queue, and optionally wherein the performance is based on the latency.

The performance monitoring module may be configured to determine the history of commands executed by the user, and optionally wherein the performance is based on the history of commands.

In a more complete arrangement, the performance monitoring module may be configured to determine granular configuration changes associated with at least one virtual network intermediary device or virtual network end device, and optionally wherein the granular configuration changes comprise one or more of:
configured IP addresses;
online ports;
offline ports;
configured routes;
configured VLANs; and/ or
configured subnets;
and optionally wherein the performance is based on the granular configuration changes.

The above-described system may be such that the virtual network device includes or comprises at least one characteristic, and optionally wherein the characteristic is at least one of:
device name;
device MAC address;
a number of ports on the device;
network capabilities;
configured VLANs;
configured routes;
MAC address table; and/or
ARP table.

In the above arrangement the virtual network device preferably includes or comprises at least one virtual port, and optionally wherein the at least one characteristic is at least one of:
a port number;
a port MAC address;
a port IP address; and/or
a port status.

In any of the above arrangements, the command may include or comprises an instruction to change at least one characteristic of at least one virtual network device,

In any of the above arrangements, the performance monitoring module may determine a transfer rate of data between the virtual ports and/or confirmed receipt of data at one or more virtual network devices, and the performance may be based on the transfer rate of data and/or confirmed receipt of data.

The performance monitoring module may further include or comprise a grading module including a test scenario bank and a grading script.

The grading module may further include or comprises a test scenario randomizer for applying random values to specified variables within the virtual network system.

According to a second aspect of the present invention, there is provided a method of operating a system as described above, the method comprising:
receiving a request to generate a first network container comprising a virtual network system;
in response to receiving the request, generating, by a network builder, the first network container comprising the virtual network system,
wherein the virtual network system comprises two or more virtual end devices and two or more virtual network devices for receiving and sending data between the two or more virtual end devices.

In an alternative arrangement the method may comprise:
receiving, at an end user device, an input from a user via a browser interface of the end user device, wherein the input comprises at least one command for at least one virtual device of a virtual network system;
monitoring, by a performance monitoring module, a performance of the virtual network system; and
outputting, by an outputting device, a score associated with the virtual network system based on the performance of the virtual network system.

According to a still further aspect of the present invention, there is provided a computer-readable medium capable of performing instructions according to the above-described method.

Advantageously, the present disclosure allows network topologies to be simulated in a way that accurately reflects the behaviour of physical networks, while reducing resource requirements. By instantiating multiple intermediary devices within the simulation environment, the system can replicate multi-layer architectures such as multi-hop routing or segmented VLANs. This enables the simulation of complex scenarios on ordinary computing hardware, thereby improving scalability and resource efficiency compared to prior systems.

### Brief Description of Drawings

Embodiments will now be described, by way of example only and with reference to the accompanying drawings having like-reference numerals, in which:
Figure 1 shows an exemplary network system;
Figure 2 shows an exemplary system for generating and running a virtual network system, according to aspects of the present disclosure;
Figure 3 shows another exemplary system for generating and running a virtual network system, according to aspects of the present disclosure;
Figure 4 shows another exemplary system for generating and running a virtual network system, according to aspects of the present disclosure;
Figure 5 shows flowcharts depicting methods for generating and running a virtual network system, according to aspects of the present disclosure;
Figure 6 shows a flowchart depicting a method of executing a command within a virtual network system, according to aspects of the present disclosure;
Figure 7 shows a block diagram of one implementation of a system according to the present disclosure; and
Figure 8 shows a computer program product.

### Specific Description

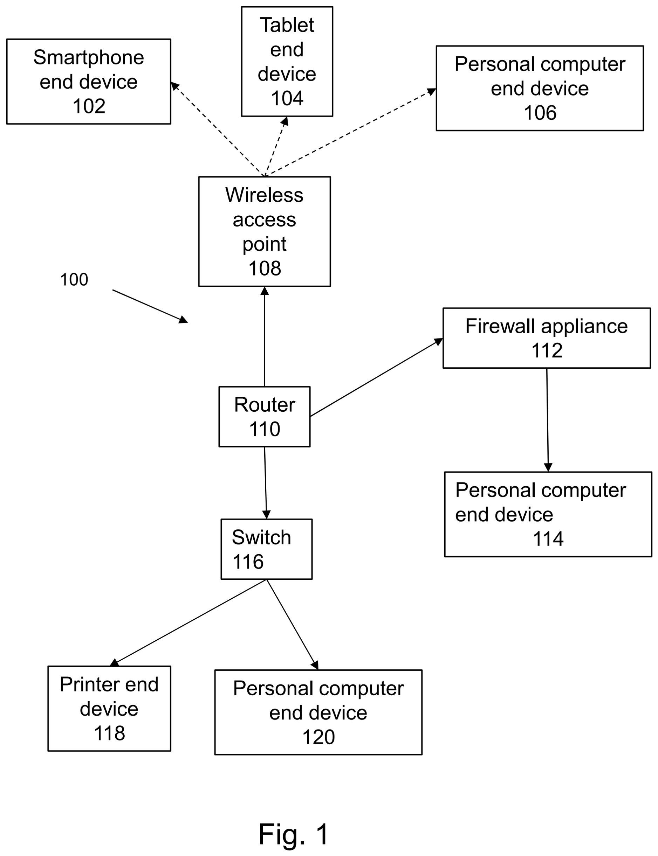

Turning to Figure 1, a network system 100 is depicted.

A network system may be made up of a plurality of network devices, including network end devices and / or network intermediary devices. Network end devices may be defined as devices that are either the source or destination of data transferred through the network, for example desktop computers, laptops, printers, or wireless tablets or smartphones. End devices may function as clients. In other words, they may perform the tasks of requesting data, and displaying received data. These end devices may act as an interface between the network and human users. End devices may alternatively or additionally function as servers. In other words, they may be equipped with programs or software to provide data or services to other nodes of the network. End devices may alternatively be referred to as end user devices, host devices, or client devices.

Network intermediary devices may be defined as devices that connect between other devices, for example switches, routers and storage devices. Further examples include wireless routers, routers, LAN switches, multilayer switches, firewall appliances, and storage arrays with controllers. These devices serve an additional purpose as well as connecting end devices. For example, they may regenerate or retransmit data signals to overcome signal damping, and/or keep a record of transfers of data (such as source address and destination address), and/or detect faults in data transfer. They may additionally or alternatively make the network more secure, for example by applying permissions to accept or deny the flow of data. They may otherwise group or direct data according to priorities set by the intermediary devices.

In some implementations, the network system may further comprise network media or connections, such as wireless media, local area network (LAN) media and/or wireless area network (WAN) media.

System 100 includes end devices 102, 104, 106, 114, 118 and 120. These include a smartphone end device 102, a tablet end device 104, personal computer end devices 106, 112, 118 and 120, and a printer end device 114. These are exemplary end devices, which are not intended to be limiting. The system 100 further includes a router 110 which is connected to a wireless access point 108. These are both examples of intermediary network devices. The router is therefore able to transfer data via a wireless connection to any of devices 102, 104, or 106. The router 110 is also connected to personal computer end device 114, which is in turn connected via a firewall appliance 112. The firewall appliance may enforce a network boundary i.e., it filters information from the router 110 to the personal computer end device 115. The system 100 further includes a switch 116, which is connected to printer end device 118 and personal computer end device 120, for example via a local access network (LAN).

Some network systems may be described as having 2-tier architecture. In other words, there may be two layers. A first layer may comprise an access layer that connects end-user devices to the network. For example, it may comprise all the LANs connected to switches. A second layer may comprise a distribution layer connecting different parts of the access layer and may facilitate packet switching. For example, the distribution layer may include a multi-layer switch to which every LAN switch is connected and may also include further routers connected to that multi-layer switch. Advantageously, such architectures are cheap to run due to their simpler structure. However, it has a single point of failure if a multilayer switch fails.

Alternatively, network systems may be described as having 3-tier architecture. In other words, there may be three layers. A first layer may comprise an access layer that connects end-user devices to the network. For example, it may comprise all the LANs connected to switches. A second layer may comprise a distribution layer connecting different parts of the access layer and may facilitate packet switching. For example, the distribution layer may include multi-layer switches to which every LAN switch is connected. These multi-layer switches may also be connected to each other, reducing single points of failure. A third layer may comprise a core layer comprising further multi-layer switches. Such architectures are more complex, however the core layer eliminates single points of failure and traffic bottleneck and allows traffic to be handled faster. There is therefore improved scalability, and more flexibility in expanding the network and it is possible to create two, three or more tier network architectures.

The network topology may be real, or it may be simulated virtually using software. The real interactions between network devices such as end devices, intermediary devices and media may be simulated by calculating attributes of the environment.

Each intermediary network device is suitable for receiving and sending data between two or more end devices. This may mean that data is transferred directly between two end devices through the intermediary device, or it may mean that a given intermediary device is part of a series of intermediary devices and/or connection devices between the two or more end devices. Intermediary devices may be suitable for one-to-one connections or one-to-many connections. In other words, a single intermediary device may be connected to a plurality of end devices.

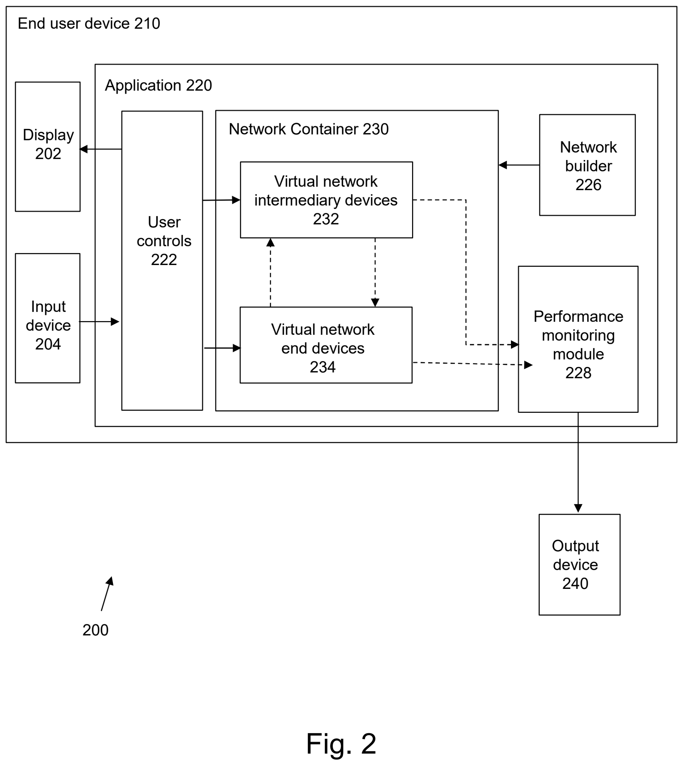

Turning to Figure 2, a system 200 according to aspects of the present disclosure is depicted.

The system 200 comprises an end user device 210, for example a personal computer, laptop, tablet or mobile device. This may also be referred to as a client device. **It** may comprise a display 202, such as a monitor or screen on which a user interface can be displayed, and an input device 204, such as a peripheral mouse and keyboard of a computer, or a touchscreen on a tablet or smartphone. The input device 204 facilitates user input, and the ability of the user to control the application user controls.

An application 220 is provided to run locally on the end user device 210. **In** some implementations, the application may be installed on the end user device 210. Alternatively in a preferred implementation, application 220 may be accessed via a browser interface on the end user device 210, as will be discussed elsewhere in this disclosure. User controls 222 are provided by the application 220, for example in a user interface. These may include clickable buttons or widgets, and/or may include a text-controlled command line interface (CLI) for controlling and configuring a network system.

Advantageously, by generating and running a virtual network system on an end user device, performance monitoring capabilities can be run at scale. As will be explained, the virtual network system may be generated and accessed via a browser interface of an end user device. Prior art systems known in the art typically cannot be generated and accessed via a browser interface of an end user device, but rather require installation of an application. As will be explained, the present disclosure may not require such installation. Further, due to the resource efficiency of the system, multiple instances of networks can be run concurrently on a single end user device. Multiple end user devices can also simultaneously access the application via their respective browsers. Both of these abilities mean that multiple different network instances can be run to test the efficiency of various protocols and user inputs. A score may be assigned to a user's interactions with a given instance, and that score may be indicative of efficiency.

There is provided a network builder 226 for generating and deploying a system of virtual network devices, and optionally connection components between those devices. A network container 230 generated by network builder 226 is also provided. The network container 230 may also be referred to as an instance of a network. Multiple network containers can be generated and run concurrently. In some implementations, these plurality of network containers may be interacted with or accessed via a plurality of tabs within a given user interface. Advantageously, the network builder allows an administrator to configure one instance of a network topology including devices and connections.

It is further advantageous that the devices within the generated virtual network are not self-sufficient devices, but rather have an awareness of other devices connected to it. For example, real networks pass data along a chain until they get a response that causes them to take some action. There is no need for devices such as a personal computer and a router to share settings and configurations, even if they are connected. Such sharing would be additional traffic slowing the network, and potentially exposing data to malicious activity. Similarly, these devices do not have a map of all the devices that they are connected to in the entire network. However, the present disclosure means that the devices are simulated within the same application, and this data (such as settings and configurations, and wider connections in the network) can be freely shared and accessed across the entire application.

Advantageously, this allows misconfigurations or inefficiencies to be identified, as information can be shared beyond just the information needed for the network to function. For example, information from devices spanning several links in a chain, or across subnets or layers of the network can be shared. This global awareness of the configured networks improves testing and evaluation of the virtual network system.

Within a network container 230, there is provided a virtual network system that simulate a network such as system 100 depicted in Figure 1. The virtual network system may comprise virtual network intermediary devices 232 and virtual network end devices 234. There may be connections between the virtual intermediary devices and virtual end devices.

There are provided two or more virtual network intermediary devices 232, and more preferably, three or more. These may include virtual network switches, virtual network routers, and virtual network storage devices. Similarly, there are provided two or more virtual network end devices 234, and more preferably, three or more. In some implementations, there may also be a plurality of virtual connection devices for connecting the virtual network intermediary devices 232 and the network end devices 234. These virtual connection devices may also be described as virtual links, virtual connections or virtual cables.

System 200 further comprises a performance monitoring module 228 for monitoring the performance of the virtual network system. The performance may be based on the latency of the virtual network system. Alternatively, or additionally, performance may be based on the history of commands executed by the user. Alternatively, or additionally, performance may be based on granular configuration changes associated with at least one virtual device of the virtual network system. The performance monitoring module may be configured to determine at least one of these performance factors, for example by monitoring inputs and outputs from the network container, or receiving a history associated with virtual devices within the virtual network system.

In some implementations, the performance monitoring module may operate at multiple levels of the simulation. For example, the performance monitoring module may monitor performance at the level of individual virtual ports (e.g. packet transmission delay, error rates), at the level of intermediary devices (e.g. routing table updates, switching delays, buffer occupancy), and at the level of the overall virtual network container (e.g. end-to-end throughput, jitter, aggregate latency). This hierarchical monitoring enables performance evaluation to be conducted both at a fine-grained device level and at a system-wide level.

The performance monitoring module may employ time-based monitoring (e.g. periodically sampling latency values at fixed intervals) and/or event-based monitoring (e.g. logging the occurrence of configuration changes, port status changes, or error events). In this way, the performance monitoring module may capture both steady-state performance and transient performance variations caused by user actions or environmental conditions simulated within the container.

In one arrangement, the performance monitoring module may be integrated with the frame manager and job queue to intercept simulation data frames as they are scheduled and executed. By measuring the time between enqueue and dequeue operations, the performance monitoring module can determine frame processing latency. Similarly, by correlating job queue events with user commands, the performance monitoring module can assess the efficiency of command execution. This integration ensures that the monitoring process directly reflects the operational behaviour of the simulation, rather than relying on post-processed log files.

The performance monitoring module may derive metrics based on raw monitoring data. For example, it may compute mean latency, jitter, and variance values for simulated packet flows. It may also calculate utilisation ratios for simulated network links or virtual device buffers. Further, in some examples, the performance monitoring module may maintain a rolling average of user command efficiency, defined as the ratio of successfully executed commands to total commands issued within a given time window.

In some examples, the performance monitoring may be adaptive. The performance monitoring module may initially sample performance at a coarse granularity and, upon detecting anomalies (e.g. unexpected latency spikes or repeated configuration errors), increase its sampling resolution to capture more detailed diagnostic data. This reduces resource consumption in normal operation, while still providing fine-grained information when required. There is further provided an output device 240 for outputting a score associated with the virtual network system based on the performance of the virtual network system. In some implementations, the score may be generated by the performance monitoring module 228 at the end user device 210. Alternatively, the score may be generated at the output device 240.

The output device 240 may be implemented in a variety of forms. In one arrangement, the output device comprises a display on the end-user device 210, such as a monitor, tablet, or smartphone screen, on which the score is rendered in a graphical or numerical format. In other arrangements, the output device may be a remote server configured to store and process scores associated with multiple users or simulation instances, with results being transmitted back to end-user devices via a network. The output device may also include peripheral interfaces such as printers or external dashboards for producing permanent or large-scale score records.

The score generated may be expressed in different ways depending on the application scenario. In some implementations, the score is a numerical value on a continuous or discrete scale, such as a percentage or a value out of ten. In other implementations, the score may be a letter grade (e.g. A-F) or a categorical output (e.g. "poor", "good", "excellent"). In training or examination contexts, the score may be linked to threshold values that determine pass/fail outcomes or progression levels. The score is based at least on the performance determined by the performance monitoring module, and optionally may be based on other factors such as a complexity of a network system within the network container. For example, a more complex network system may be expected to have more latency, which the score may reflect.

In some examples, the performance monitoring data obtained by the performance monitoring module may be normalised and weighted according to predefined scoring rules. For instance, excessive latency may reduce the score, while correct configuration of VLANs and routing tables may increase the score. The weighting factors may be adjusted depending on the complexity of the simulated topology, thereby ensuring that the score remains meaningful across different network scenarios.

For instance, end-to-end latency may be given a higher weighting than command history in certain scenarios, while configuration accuracy may be weighted more heavily in training examinations. The score may represent an aggregation of several sub-scores corresponding to different aspects of network performance, such as latency score, configuration score, and throughput score. This modular approach ensures that the final score accurately reflects the multi-dimensional performance of the simulated network.

When there are multiple network containers running simultaneously, a score may be assigned to each instance, or it may be assigned to the user. For example, the performance of each instance may be averaged to give an overall score indicative of the user's performance.

In examples, the output score may be used as a feedback mechanism for the user. For example, a low score may indicate inefficient command sequences or sub-optimal configurations, while a high score may reflect efficient and technically correct network design. In large-scale training environments, the score may be used to compare multiple users' performance across identical simulation scenarios, thereby standardising evaluation. In network testing or benchmarking environments, the score may be used to rank the relative efficiency of different simulated topologies, supporting objective selection of optimal network designs.

In some implementations, the output score generated by the system may be used to recommend changes or optimisations to a simulated network. For example, if a given protocol or command sequence yields a lower score compared to alternatives, the system may suggest alternative protocols or modified command sequences that are likely to improve efficiency. In this way, the score serves not only as a measure of performance, but also as a feedback mechanism to guide users toward more optimal network designs and configurations within the simulation environment.

In further implementations, the score may be employed to generate recommendations for real-world networks based on the outcomes of simulation. Because the simulation system is configured to model granular configuration changes, such as enabling or disabling specific ports, assigning IP addresses, or modifying routing tables, the score can be used to identify which of these configurations produce the most efficient performance in a real-world network. The best-scoring simulation may then be used as the basis for recommending similar configuration changes in a real-world networking deployment.

For example, where multiple simulated network topologies are tested, the configuration producing the highest score may be selected for real world deployment. This configuration may define optimal settings or parameters such as any one or more of: IP addressing schemes, port states (online or offline), routing entries, VLAN assignments, or subnet structures. These optimised settings or parameters may then be recommended for implementation in a real-world network, thereby improving the operational efficiency of the real-world network based on the outcomes of the simulation.

In some implementations, the recommendations may be generated automatically by the output device in conjunction with the performance monitoring module. The performance monitoring module may analyse the contribution of different granular configuration changes to the output score and determine which adjustments are most strongly correlated with improved performance. The output device may then present a set of recommended changes, either within the simulation environment for further testing, or as actionable instructions for applying to a real-world network.

By linking the score to actionable configuration recommendations, the disclosed system provides a technical bridge between virtual network simulations and real network optimisation. This enables the system to not only evaluate performance in a simulated context, but also to deliver concrete technical improvements in live deployments, based on the quantitative results of simulation.

These arrangements provide the advantage that the simulation environment not only replicates the structural topology of a network, but also provides meaningful quantitative insights into its operational performance. By embedding performance monitoring functionality within the simulation execution layer, the disclosed system achieves high-fidelity performance measurement with minimal additional resource consumption.

Providing a quantitative score offers technical advantages over qualitative observation of simulation outputs. The score condenses diverse technical measurements into a standardised and comparable form, enabling automated processing and large-scale evaluation across multiple simulations. This allows assessment and benchmarking to be conducted efficiently without the need for manual analysis of detailed log data. By generating a technical output that is directly derived from monitored simulation metrics, the system ensures that the score is an objective reflection of network performance, rather than a subjective interpretation.

Optionally, there may be further provided an exam delivery module in communication with the performance monitoring module. The output device 240 may be associated with the exam delivery module. Preferably, the exam delivery module is remote to the end user device 210, and the performance monitoring module 228 which is run locally on the end user device 210.

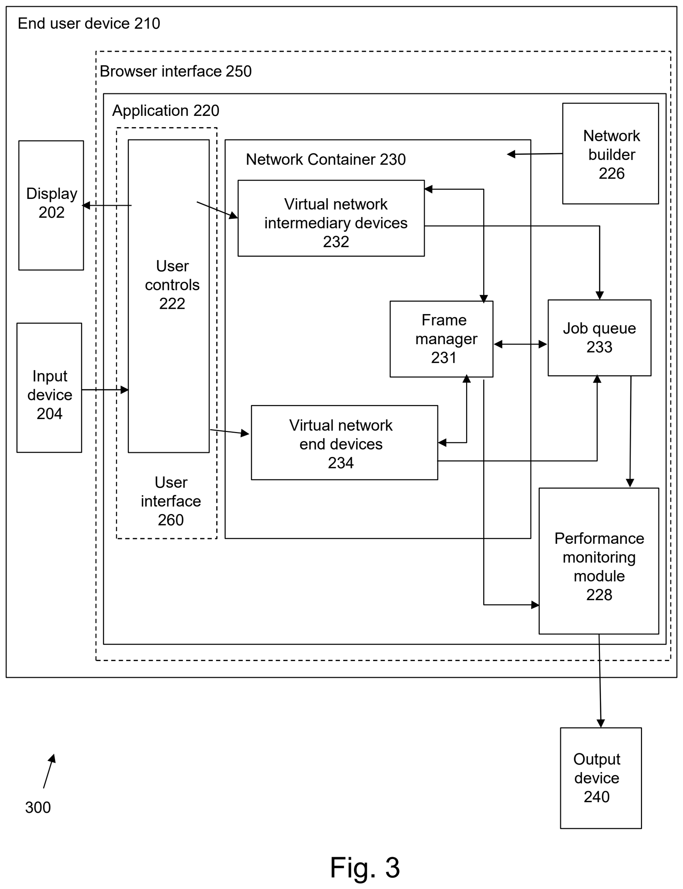

Turning to Figure 3, a system 300 according to aspects of the present disclosure is depicted.

Features of system 200 as described above are also provided in system 300. There is further provided a browser interface 250 for loading and running application 220. In other words, the browser is a platform for running the simulation such that application 220 may be accessed via browser interface 250 on the end user device 210 (for example, a web browser). A browser may be any HTML5 compatible browser suitable for browsing the internet.

In some alternative examples, the application 220 may be a downloadable application that can be installed on the end user device 210. However, as will be explained below, it is particularly advantageous for the application 220 to be accessed by the browser as it reduces the local storage burden on the end user device 210, as there is no need for downloads and installations since the application can be accessed remotely. Accessing the application 220 using a browser interface 250 also allows the application 220 to be accessed across various devices with internet connectivity, such as a tablet or mobile phone.

There is further provided a user interface 260, through which user controls 222 may be accessed. It is particularly advantageous to provide a modular interface. In other words, the virtual network system in a network container is not affected by the interface. Therefore, the interface may be changed without any impact on the underlying simulation. To select functions on the interface, input devices 204 of the end user device 210 such as a mouse, touchpad, touchscreen or keyboard may be used.

In some implementations, instructions are received at the end user device selecting a first modular user interface of a plurality of interfaces. These may be received via user input at the end device itself, or from a central server or another end user device. The selection may, for example, be between a Graphical User Interface (GUI) and a Command Line Interface (CLI). A GUI may comprise icons or widgets, which may be selected using a pointer. There may also be features such as tabs to switch between different network containers, scroll bars, menus for navigating through the interface. A CLI is a text-based interface through which a user can provide instructions. Keywords and/or parameters may be typed into a command prompt.

The application 220 may be accessible through a browser interface 250 executing on an end-user device 210. The end-user device 210 may be any conventional computing device, including a laptop, desktop, tablet, or smartphone. The browser interface 250 may be any standards-compliant HTML5 browser capable of rendering modern web content and executing client-side code.

By deploying the simulation as application 220 accessible through a browser interface 250, the system may be executed without the need for specialised installation procedures, elevated permissions, or integration with host operating system network stacks.

The browser interface 250 serves as the runtime platform for both initiating and interacting with the simulation. Application 220 may be delivered to the end-user device 210 through a standard web request, and upon loading into the browser interface 250, provides the complete functionality required to instantiate, configure, and operate the virtual network system. The simulation may thus be launched directly from a uniform resource locator (URL) or equivalent access path, without dependence on preinstalled virtualisation engines, hypervisors, or packet drivers on the end-user device. This arrangement enables lightweight deployment, where the simulation can be accessed on demand by any user with a compatible browser and network connection.

The browser interface 250 provides a graphical environment for configuring the virtual network system. Within the browser, users may select from available end devices and intermediary devices, drag and drop them into a topology canvas, and connect them using simulated links. The configuration of device properties, such as IP addresses, VLAN identifiers, routing entries, or port states, may be performed via input forms or command line windows rendered directly within the browser interface 250. Because the simulation is self-contained and implements its own subset of networking protocols, these configurations are handled internally by application 220 without reliance on host operating system resources. The browser interface 250 thereby provides a consistent and platform-agnostic mechanism for defining network topologies and executing configuration commands.

As such, the application 220 is configured for lightweight, standalone deployment and operation, including execution directly within a web browser environment without reliance on any pre-existing networking components of the host operating system. To enable such deployment, the simulation is built upon a set of custom-made networking protocols that implement a subset of the core behaviours of standard protocols used in computer networks, such as TCP/IP, Ethernet, ARP, IEEE 802.1Q, and NDP. By providing its own protocol implementations for configuring, creating, and operating the virtual network system, the disclosed simulation operates self-sufficiently and does not depend upon kernel-level network stacks, virtual NICs, virtual bridges, or other host-provided networking facilities. As a result, the system can be delivered in various forms, including as a browser-executable application, a mobile application, or a standard downloadable executable, while maintaining consistent functionality across platforms.

Running application 220 in a browser interface 250 enables simulation to be performed in contexts where host-level network access is unavailable or restricted. Conventional systems known in the art such as GNS3 or other orchestrators depend on the networking stack of the underlying operating system and cannot function within a browser sandbox environment. By contrast, application 220 of the present implementation includes custom protocol implementations covering essential behaviours of one or more of: TCP/IP, Ethernet, ARP, IEEE 802.1Q, or NDP, enabling it to simulate realistic network communication fully within the browser runtime. This allows the application 220 to operate securely in browser-based execution environments while still providing accurate and configurable network simulation.

In contrast to prior virtual network applications which orchestrate and "piggy-back" on the host's existing physical or virtual networking stack, the present disclosure performs protocol handling, frame/packet construction, transmission, switching, routing, and inspection entirely within the simulation runtime. This architecture allows operation in sandboxed environments (for example, within a browser tab) where access to native sockets, raw Ethernet interfaces, or low-level kernel APIs is unavailable. Because the simulation does not require bridging to the host's network devices or drivers, it avoids host-specific configuration steps and incompatibilities that may otherwise arise from differing operating systems, driver versions, or security policies. The disclosed architecture thereby provides consistent behaviour and repeatable results across different client devices.

The custom protocol set may implement selected header fields, state machines, and timers that are sufficient to reproduce the functional behaviours of the respective standards within a simulation context. For example, the implemented subset may include Ethernet frame encapsulation and forwarding, VLAN tagging and filtering (IEEE 802.1Q), basic IP addressing and routing behaviours, neighbour discovery and ARP resolution, and transport-layer connection and acknowledgement models sufficient to simulate flow establishment and data transfer. In one implementation, certain optional or implementation-specific behaviours of the corresponding standards may be omitted where they do not materially improve fidelity for the intended simulation scenarios. This selective implementation reduces processing overhead and complexity relative to host-integrated solutions, while still permitting accurate evaluation of user configurations and traffic flows within the simulated topologies.

Using custom protocols within the simulation runtime may improve the speed and reliability of network and device setup. Because the simulation does not depend on host system services, there is no need to create, attach, or manage host virtual interfaces, kernel bridges, or external packet capture filters. The virtual network system, including end devices and multiple intermediary devices (for example, virtual switches and virtual routers), can therefore be instantiated deterministically and quickly. This may reduce the number of error modes during build, configure, monitor, and run phases. For example, failure modes relating to host permissions, kernel module availability, or driver incompatibilities are removed from the deployment path. The resulting reduction in external dependencies enables predictable startup times and improves the robustness of running simulations within application 220.

In some implementations, the system integrates packet and frame visibility. In these implementations, because the protocols are executed within the simulation runtime, the system has native access to all simulated packets and frames at every hop and on every device, including intermediary forwarding devices. The runtime may therefore expose complete packet payloads and metadata for each simulated interface and switching or routing element, without requiring external tools. A single graphical interface may present the traffic observed at any device or port in the virtual network system, enabling users to view end-to-end paths and per-hop transformations (for example, VLAN tagging, MAC learning, ARP entries, routing decisions, or ACL effects). This integrated visibility eliminates the need to deploy separate capture utilities, avoids limitations associated with capturing only at end hosts, and ensures consistent capture semantics across all devices in the simulated topology.

The output device functionality may also be integrated into the browser interface 250. In one example, real-time metrics captured by the performance monitoring module may be displayed within the browser as charts, tables, or heat maps. The output score associated with the performance of the virtual network system may be presented to the user. In this way, the browser interface 250 not only provides a configuration and execution environment for application 220, but also visualisation of the performance scoring.

In further embodiments, the browser interface 250 may be extended to provide configuration recommendations derived from the performance score. For example, if the simulation shows degraded performance due to inefficient routing, the browser interface 250 may highlight the corresponding routing entries in the user interface and suggest revised configurations. If VLAN tagging errors are detected, the browser may highlight the affected virtual switch ports and propose corrective settings.

By leveraging the universality of HTML5-compatible browsers, the disclosed system can be deployed in a number of situations without requiring pre-installed specialised software. This provides advantages over prior art tools, which typically install and configure dependencies on the host system. Application 220, when accessed through browser interface 250, is therefore a self-contained simulation environment capable of instantiating virtual topologies, executing custom networking protocols, monitoring and scoring performance, and presenting actionable recommendations all within the sandbox of a standard browser environment.

This arrangement provides a lightweight yet powerful mechanism for delivering virtual network simulations. Users can access application 220 instantly through browser interface 250 on end-user device 210, configure and run simulations without host dependencies, and obtain quantitative scores and configuration guidance directly in their browser session. The combination of self-sufficient protocol implementations, integrated performance monitoring and scoring, and browser-based delivery makes the disclosed system a uniquely scalable and platform-agnostic solution for simulating and optimising computer networks.

The standalone nature of the simulation also facilitates deployment at scale. **In** a browser-based context, multiple independent simulation instances can be executed concurrently across different clients without requiring server-side virtualisation of network stacks. Scores can be stored locally or transmitted to a remote source for later analysis. Because all protocol processing is internal to the runtime, the scoring results are directly comparable across clients and sessions, independent of host operating system versions or drivers.

The integration of the output device with the scoring process provides a technical advantage over qualitative inspection alone. The score offers a standardised, quantitative measure that condenses technical metrics into a compact result suitable for automated processing, large-scale evaluation, and reproducible comparison. In training scenarios, the score can indicate whether a candidate configuration meets defined technical thresholds. In testing or benchmarking scenarios, the score can differentiate protocol selections or topological designs based on objective, simulation-derived data. In optimisation scenarios, the score can be used to select the highest-performing configuration from a set of alternatives and to generate actionable recommendations for application to real-world networks.

Collectively, the lightweight, standalone architecture and the integrated output device with quantitative scoring provide a simulation environment that is both technically self-sufficient and operationally efficient. The system is thereby capable of rapidly instantiating configurable network topologies, accurately reproducing key behaviours of standard protocols within a simulation context and delivering standardised performance evaluations and actionable configuration guidance from a single interface.

Further, due to the lightweight and resource-efficient architecture of the disclosed system, multiple instances of virtual network systems can be executed concurrently on a single end user device 210. Because application 220 can be accessed via browser interface 250, each simulation instance operates as a fully self-contained process within the browser interface 250. This permits an end user device to maintain several parallel simulations in separate browser tabs, windows, or sessions without conflict. Each simulation instance may comprise multiple virtual end devices and multiple virtual intermediary devices, yet the cumulative system load remains within manageable limits due to the streamlined nature of the protocol implementations and the efficient frame manager/job queue architecture. This arrangement allows, for example, a user to experiment with several different network configurations in parallel and to compare their respective performance scores in real time.

In addition, multiple independent end user devices may simultaneously access the application via their respective browser interfaces 250. Because the simulation is deployed as a fully self-contained application 220, users require only a standard browser to initiate and run the system. Each user operates in an isolated simulation environment, ensuring that configuration changes, performance monitoring, and scoring results for one user do not interfere with those of another. In scenarios such as classroom training or enterprise evaluation exercises, many users may therefore conduct network simulations concurrently, each generating their own performance scores and configuration recommendations.

In some implementations, simulation instances across multiple end user devices may be linked to a common server or cloud repository, enabling aggregation of results. For example, performance scores, topology snapshots, and configuration histories from each user's browser-based session may be uploaded for comparative benchmarking. This facilitates large-scale training exercises in which cohorts of users attempt identical network scenarios, and their scores are collated for objective comparison. Similarly, in corporate environments, multiple engineers may test alternative network designs simultaneously, with their results aggregated to identify the configuration that yields the highest performance score.

These capabilities are made possible by the efficiency and independence of the disclosed system. Because the simulation avoids reliance on heavyweight host-level networking stacks or external virtualisation engines, it consumes fewer resources than conventional orchestration-based solutions. The system therefore scales horizontally across multiple end user devices and vertically across multiple concurrent sessions on a single device. This scalability enables a wide range of use cases, from personal experimentation with multiple topologies, to classroom-scale training with dozens of simultaneous users, to enterprise-scale evaluation of candidate network designs.

The network container 230 may comprise a frame manager 231 for storing and/or processing a queue of frames generated by the virtual devices of the virtual network system. The frame manager 231 may also be referred to as a frame storage container. Frames may also be referred to as data frames. Frames leave the virtual network device and travel to the frame manager where they are stored in a queue, waiting for processing. Advantageously, latency of a network system can be simulated in the frame manager. Further, all network frames from all virtual devices may be processed by a single frame manager, using a single thread of a central processing unit (CPU). A CPU thread is a virtual simulation of a real CPU core. There is therefore no need for virtualized hardware or an operating system, as in conventional systems. This contributes to the improvement in resource efficiency.

For example, wireless networks typically have a high packet loss rate, compared to local area networks (LANs). A frame manager is therefore able to introduce latency based on the characteristics of the relevant virtual network end devices, virtual network intermediary devices and/or virtual connections between them.

There is further provided a job queue for completing a job in discrete steps. A job may be created by the simulated components, such as the virtual end devices, virtual intermediary devices and / or virtual connection devices.

A tick may be described as a discrete slice of the simulation split with a start and an end. At tick start, a job scheduled for this particular tick is processed and then removed from the queue. A job or a plurality of jobs in the job queue may be a assigned a tick, or a timestamp, that indicates when that job should be executed. The job queue 233 may receive jobs from the frame manager 231. Optionally, in some implementations it may receive jobs directly from the virtual network devices themselves. For example, jobs that are not directly associated with network traffic can be sent to the job queue without bypassing the frame manager, such as configuration changes to the devices.

Preferably, the performance monitoring module is configured to determine latency of the frame manager and/or the job queue. Increased latency may indicate reduced efficiency of the protocols or commands initiated by a user. For example, the latency may indicate that those commands caused delays in data transfer within the network. Alternatively, or additionally, the performance monitoring module may be configured to receive a history of jobs from the job queue. In some implementations, this may be compared to a history of commands received via user inputs. It may therefore be determined how effectively jobs have been executed. For example, if job execution has not succeeded, and a new job has been created in the job queue to report failure to the source device, that may impact the performance score.

As discussed previously, there are provided two or more virtual network intermediary devices 232, and two or more virtual network end devices 234 within the network container 230. Each network device may have at least one characteristic associated with it. For example, device name, device MAC address, a number of ports on the device, network capabilities (such as whether a switch device is layer 2 or layer 3), or configuration (such as configured VLANs, configured routes, MAC address table, ARP table).

For each network device, there may be provided a network card for simulating ports to other devices. Frames leaving a given virtual device may therefore travel via the associated virtual network card to the frame manager 231. Similarly, frames may be delivered to each virtual device via the virtual network cards. For example, the job queue may execute a job by delivering frames to the network card of a network device. In some implementations, the characteristics associated with each network device may further include characteristics of one or more ports of the network device. For example, the characteristics may include a port number, a port MAC address, a port IP address, and/or a port status (such as online or offline). There may be provided one virtual network card for each virtual port.

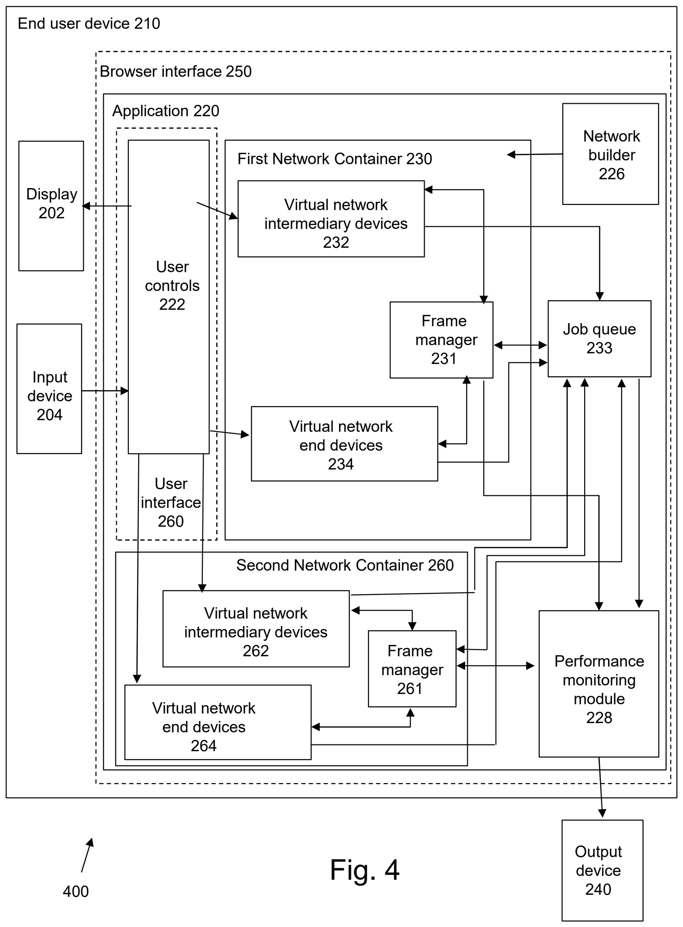

Turning to figure 4, a system 400 according to aspects of the present disclosure is depicted.

Features of systems 200 and 300 as described above are also provided in system 400. There is further provided a second network container 260. As described with reference to the first network container 230, the second network container comprises a second virtual network system. The second virtual network system may comprise two or more virtual end devices and two or more virtual intermediary devices for receiving and sending data between the two or more virtual end devices. In some implementations, it may further comprise virtual connection devices for connecting any of the virtual end devices and virtual intermediary devices such that data can be transferred between them.

There is provided, within the second network container 260, virtual network intermediary devices 262, virtual network end devices 264, and a frame manager 261. The job queue 233 may receive jobs from one or more of: the first frame manager 231 of the first network container 230, the second frame manager 261 of the second network container 260, the virtual network intermediary devices 232 or the virtual network end devices 234 of the first network container 230, and/or the virtual network intermediary devices 262 or the virtual network end devices 264 of the second network container 260. These jobs will be executed by the job queue, for example by delivering frames to the network devices.

In some implementations, a plurality of network containers may be provided. The job queue 233 is advantageously configured to receive jobs from the plurality of containers and execute them. Since the systems of the present disclosure are resource efficient, there can be multiple instances of different network topologies simulated and analysed on a single end user device 210.

In some implementations, specified variables within the virtual network system may be randomised. The network builder may receive at least one random value from a test scenario randomizer module, and accordingly randomise at least one variable of the network. Preferably, a plurality of variables in the network system are adjusted by a plurality of random values. For example, device names, port **IP** addresses, port MAC Addresses, port Status (e.g., online / offline) may be adjusted. Device configurations may also be adjusted, such as the created and configured VLANS, and / or created static routes. The number of network devices, or the relative number of end devices and intermediary devices (or subcategories thereof) may also be adjusted.

Introducing an element of randomness is advantageous as it ensures that users experience different scenarios provided by the same system. This can be used to test protocols in different network environments and assess the outcome. It may also be used to detect faults or areas of sub-optical efficiency within a network. Alternatively, it may be used to test different candidates in an exam or training scenario, and to prevent and trace leaks of an exam scenario.

There may be provided a test scenario bank that provides preset network containers comprising virtual network systems. In some implementations, the parameters of the instances in the test scenario bank may meet criteria such as the total number of devices, the ratio of device types (such as virtual end devices to virtual intermediary devices, or virtual switches to virtual routers). Optionally, the network builder 226 may receive a preset configuration or set of criteria from the test scenario bank for use in building the network system.

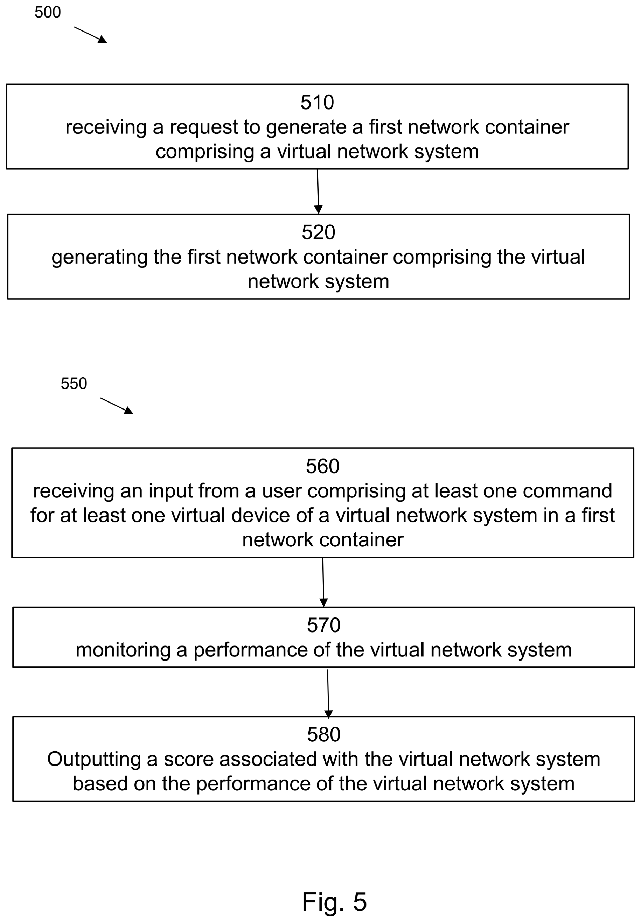

Turning to Figure 5, methods 500 and 550 according to the present disclosure are depicted. The method is suitable for being performed, for example, by system 200, 300 or 400.

At block 510, a request to generate a first network container comprising a virtual network system is received. The request may be received from an end user device. The request may be received via the browser interface.

At block 520, the first network container comprising the virtual network system is generated. In some implementations, the first network container may be one of a plurality of network containers. The method may further comprise repeating blocks 510 and 520 to generate additional network containers or instances within application 220.

Optionally in some examples, the method 500 may further comprise downloading and/or installing application 220 on the end user device 210. The downloading and / or installing may be in response to the request received via an internet-connected browser interface.

At block 560, an input is received from a user, the input comprising at least one command for at least one virtual device of a virtual network system in a first network container.

At block 570, a performance of the virtual network system is monitored. The monitoring may be performed by a performance monitoring module located within application 220. In some preferable implementations, the performance monitoring module may be downloaded to the end user device 210 via an internet-connected browser interface.

As discussed elsewhere, monitoring the performance may comprise determining the latency of the frame manager and/or the job queue. It may alternatively or additional comprise determining the history of commands executed by the user. It may additionally or alternatively comprise determining granular configuration changes associated with at least one virtual network intermediary device and/or at least one virtual network end device. It may alternatively or additionally comprise determining a transfer rate of data between the simulated ports of one or more virtual network devices. It may alternatively or additionally comprise confirming receipt of data at one or more virtual network devices. For example, the performance may be based on a command from the user to change a port from offline to online, and/ or the latency in the frame manager resulting from this granular configuration change, and/or the transfer rate of data to a virtual end device connected to the newly online port.

At block 580, a score associated with the virtual network system is output, based on the performance of the virtual network system.

In some implementations, the output device 240 may be the display 202 of the end user device 210. In other implementations, it may be a device other than the end user device 210, for example an external server. Optionally, there may be a central server in connection with the performance monitoring module 228 of a plurality of end user devices 210, for collecting a score associated with a plurality of users. The central server may send the scores to the output device 240 for display.

Optionally, all of blocks 510, 520, 560, 570 and 580 may be performed in sequence. In some implementations, blocks 510 and 520 may be performed in sequence, and blocks 560, 570 and 580 may be performed in sequence, but they may be performed at separate locations or after a time delay.

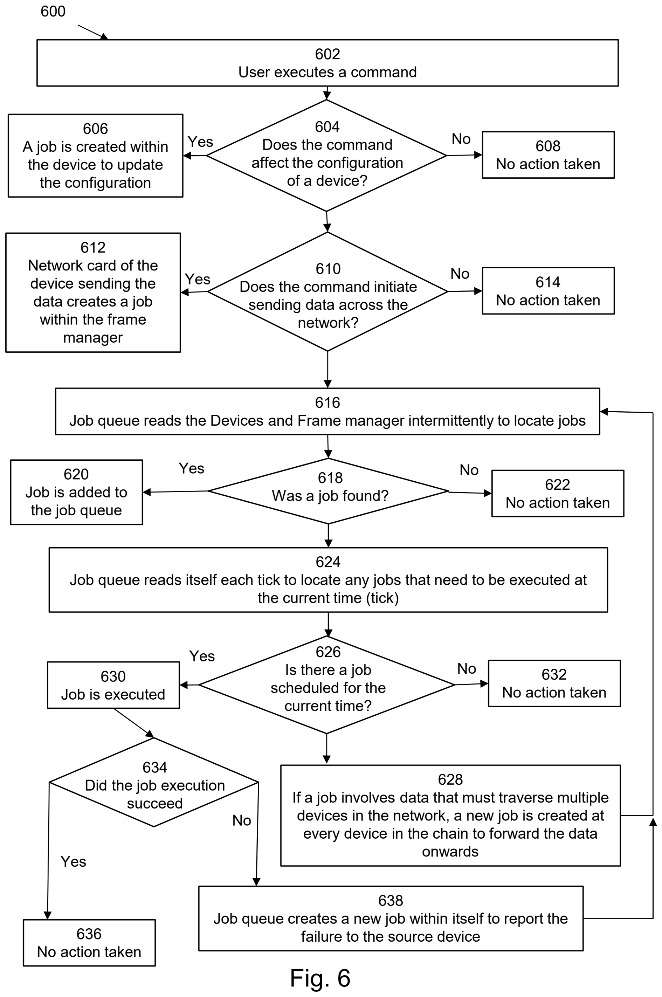

Turning to Figure 6, method 600 according to the present disclosure is depicted. The method is suitable for being performed, for example, by system 200, 300 or 400.

At block 602, a user executes a command. As discussed elsewhere in this disclosure, the execution may comprise inputting the command via an input device 204 at the end user device 210, such as a mouse, touchscreen or keyboard. The command may be received via user controls 222 within application 220.

At block 604, it is determined whether the command affects the configuration of a device. **If it** does, then at block 606, a job is created within the device to update the configuration. If it does not, then at block 608, no action is taken.

As examples, a command may change the configuration of online or offline ports of a device, or configured routes of network traffic. A command may additionally or alternatively change the configuration of a virtual local area network (VLAN) or a subnet.. If a command is related to a device configuration, a method called from the device namespace may be initiated. The job may be created at the device for retrieval by the job queue. If a command is related to network traffic, a method called from the device network card namespace may be initiated. The job may be created at the device network card for retrieval by the job queue.

At block 610, it is determined whether the command initiates sending data across the network. If it does, then at block 612, a network card of the device sending the data creates a job within the frame manager. If it does not, then at block 614, no action is taken.

Preferably, the job contains the data to be sent, the destination of the data, and the time for execution. The time may also be referred to as a tick.

At block 616, the job queue reads the devices and the frame manger intermittently to locate jobs. Preferably, the job queue reads the devices and the frame manager at intervals of around one per tick. Preferably, each tick lasts one millisecond, however the length of a tick may be modified.

At block 618, it is determined whether or not a job has been found by the reading carried out at block 616. If a job has been found, the job is added to the job queue at block 620. If one hasn't, then no action is taken at block 622.

At block 624, the job queue reads itself each tick to locate any jobs that need to be executed at the current time i.e., the current tick. In this way, jobs are executed at the intended time. For example, data is sent from one device to another at the time indicated by the job. There may be latency added by the frame manager to simulate the latency of a real network, for example a delay caused by a poor connection or a weak wireless signal.

At block 626, it is determined whether there is a job scheduled for the current time. If there is, the job is executed at block 630. If there isn't, no action is taken at block 632.

At block 628, it is determined whether a job involves data that must traverse multiple devices, then a new job is created at every device in the chain to forward the data onwards. These jobs will then be read by the job queue when it intermittently reads the devices and frame manager at block 616.

At block 634, it is determined whether the job execution succeeded. If it did, then no action is taken at block 636. If it didn't, then the job queue creates a new job within itself to report the failure to the source device at block 636.

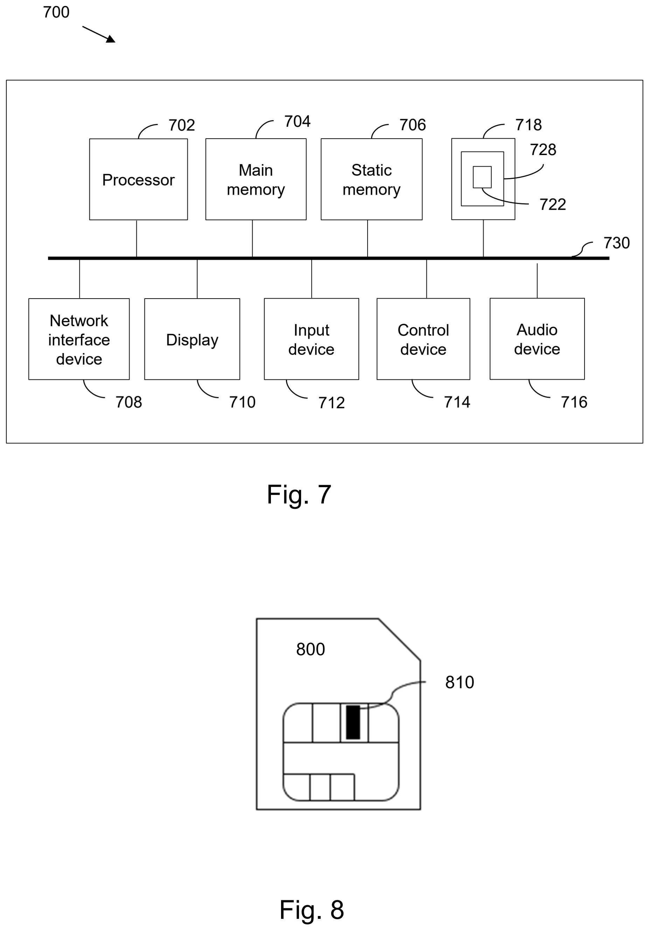

Figure 7 illustrates a block diagram of one implementation of a system 500 according to the present disclosure. The system 500 comprises a computing system 510 within which a set of instructions, for causing the computing system 510 to perform any one or more of the methods discussed herein, may be executed.

The computing system 500 shall be taken to include any number or collection of machines, e.g. computing device(s), that individually or jointly execute a set (or multiple sets) of instructions to perform any one or more of the methods discussed herein. That is, hardware and/or software may be provided in a single computing device, or distributed across a plurality of computing devices in the computing system. In some implementations, one or more elements of the computing system may be connected (e.g., networked) to other machines, for example in a Local Area Network (LAN), an intranet, an extranet, or the Internet. One or more elements of the computing system may operate in the capacity of a server or a client machine in a client-server network environment, or as a peer machine in a peer-to-peer (or distributed) network environment. One or more elements of the computing system may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine.

The example computing device 700 includes a processing device 702, a main memory 704 (e.g., read-only memory (ROM), flash memory, dynamic random access memory (DRAM) such as synchronous DRAM (SDRAM) or Rambus DRAM (RDRAM), etc.), a static memory 706 (e.g., flash memory, static random access memory (SRAM), etc.), and a secondary memory (e.g., a data storage device 1318), which communicate with each other via a bus 730.

Processing device 702 represents one or more general-purpose processors such as a microprocessor, central processing unit, or the like. More particularly, the processing device 702 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processing device 702 may also be one or more special-purpose processing devices such as an application specific integrated circuit (ASIC), a field programmable gate array (FPGA), a digital signal processor (DSP), network processor, or the like. Processing device 702 is configured to execute the processing logic (instructions 1322) for performing the operations and steps discussed herein.

The computing device 700 may further include a network interface device 708. The computing device 1300 also may include a video display unit 710 (e.g., a liquid crystal display (LCD) or a cathode ray tube (CRT)), an alphanumeric input device 712 (e.g., a keyboard or touchscreen), a cursor control device 714 (e.g., a mouse or touchscreen), and an audio device 716 (e.g., a speaker).

The data storage device 718 may include one or more machine-readable storage media (or more specifically one or more non-transitory computer-readable storage media) 728 on which is stored one or more sets of instructions 722 embodying any one or more of the methodologies or functions described herein. The instructions 722 may also reside, completely or at least partially, within the main memory 704 and/or within the processing device 702 during execution thereof by the computer system 700, the main memory 704 and the processing device 702 also constituting computer-readable storage media.

The various methods described above may be implemented by a computer program. The computer program may include computer code arranged to instruct a computer to perform the functions of one or more of the various methods described above. The computer program and/or the code for performing such methods may be provided to an apparatus, such as a computer, on one or more computer readable media or, more generally, a computer program product. The computer readable media may be transitory or non-transitory. The one or more computer readable media could be, for example, an electronic, magnetic, optical, electromagnetic, infrared, or semiconductor system, or a propagation medium for data transmission, for example for downloading the code over the Internet. Alternatively, the one or more computer readable media could take the form of one or more physical computer readable media such as semiconductor or solid state memory, magnetic tape, a removable computer diskette, a random access memory (RAM), a read-only memory (ROM), a rigid magnetic disc, and an optical disk, such as a CD-ROM, CD-R/W or DVD.

In an implementation, the modules, components and other features described herein can be implemented as discrete components or integrated in the functionality of hardware components such as ASICS, FPGAs, DSPs or similar devices.

A "hardware component" is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase "hardware component" should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

In some implementations, computing system 700 may further includes training circuitry. The training circuitry may be configured to train a method as described herein. The model may comprise a deep neural network (DNN), such as a convolutional neural network (CNN) and/or recurrent neural network (RNN). Training circuitry may be configured to execute instructions to train a model that can be used to perform a method as described herein. Training circuitry may be configured to access training data and/or testing data from memory 704 or 706 or from a remote data source, for example via network interface circuitry 708. In some examples, training data and/or testing data may be obtained from an external component. In some implementations, training circuitry may be used to update, verify and/or maintain the model.

The various methods described above may be implemented by a computer program. The computer program may include computer code (e.g. instructions) 810 arranged to instruct a computer to perform the functions of one or more of the various methods described above. The steps of the methods described above may be performed in any suitable order. The computer program and/or the code 810 for performing such methods may be provided to an apparatus, such as a computer, on one or more computer readable media or, more generally, a computer program product 800, depicted in Figure 6.

The computer readable media may be transitory or non-transitory. The one or more computer readable media 800 could be, for example, an electronic, magnetic, optical, electromagnetic, infrared, or semiconductor system, or a propagation medium for data transmission, for example for downloading the code over the Internet. Alternatively, the one or more computer readable media could take the form of one or more physical computer readable media such as semiconductor or solid state memory, magnetic tape, a removable computer diskette, a random access memory (RAM), a read-only memory (ROM), a rigid magnetic disc, and an optical disk, such as a CD-ROM, CD-R/W or DVD. The instructions 810 may also reside, completely or at least partially, within the main memory 704 and/or within processor 702, the memory 704 and the processor 702 also constituting computer-readable storage media.

In contrast to prior visibility and monitoring systems, the present disclosure provides a simulation environment in which multiple intermediary devices may be instantiated within a virtual network system. This allows the network simulation to replicate realistic multi-layer topologies, including multi-hop routing, VLAN segmentation, and redundant architectures. A significant advantage is that such simulation can be performed on ordinary computing hardware, without the need for multiple physical devices. This improves scalability and resource efficiency, as several complex networks can be simulated concurrently on a single machine, while still accurately reflecting the behaviours of real networks.

The inclusion of a dedicated performance monitoring module represents a further technical improvement. Unlike simple traffic logging or event capture, the module is configured to assess simulation-specific performance parameters such as the latency of a frame manager or job queue, the history of commands executed by a user, and granular configuration changes within virtual devices. These parameters directly correspond to the functioning of the simulated network, and provide feedback on how the virtual topology responds to different inputs. This permits precise evaluation of the technical behaviour of simulated networks in a way that was not achievable with conventional systems.

By processing the measured performance parameters into a quantitative score, the system delivers a technical output that standardises results across different simulations. The score may be expressed as a numerical value, grade, or category, and is derived directly from objective simulation data such as latency, data transfer rates, or configuration states. The scoring mechanism therefore enables automated benchmarking of different network designs or user inputs. This allows performance to be compared systematically across multiple simulations, reducing the need for manual analysis of raw performance data and supporting scalable testing and training.

A further advantage of the disclosed system is the ability to operate entirely through browser interface on an end user device. Because the system comprises an application which is self-contained and implements its own networking protocols, the simulation may be launched and executed directly within any standard browser. This eliminates the need for dedicated software installation, host-level drivers, or virtualisation engines. The system can therefore be accessed instantly from virtually any device with a browser, ensuring platform independence and greatly simplifying deployment in training, testing, or enterprise environments.

Browser-based access also provides inherent scalability. Multiple users may simultaneously access the application through their respective browser interfaces, each operating in an isolated simulation environment. This allows entire classrooms or distributed teams to run simulations concurrently without risk of interference or cross-contamination of results. The browser platform further enables seamless updates and delivery of new features, as the application can be maintained centrally and distributed to all users without requiring individual software upgrades. Together, these characteristics make browser-based access a highly efficient and universally deployable mechanism for providing lightweight, self-sufficient network simulations.

The disclosed system is specifically adapted to simulate technical network systems and to evaluate their operation in a controlled environment. The implementation of multiple intermediary devices, the monitoring of simulation performance, and the generation of a quantitative score each contribute to an improved simulation architecture. These improvements alter the way the simulation itself functions, delivering technical advantages in scalability, resource efficiency, and evaluation accuracy. As such, the present disclosure provides a computer-implemented simulation that serves a concrete technical purpose and improves the implementation of the underlying system.

It is noted that computer-implemented simulations can provide technical benefits when they are functionally limited to a technical purpose. The present disclosure addresses precisely this situation, as it simulates the functioning of network topologies and provides measurable technical outputs that reflect real-world network behaviours. In this way, the disclosed system contributes to the technical field of network engineering and provides a basis for reliable design, testing, and training.

In an implementation, the modules, components and other features described herein can be implemented as discrete components or integrated in the functionality of hardware components such as ASICS, FPGAs, DSPs or similar devices.

A "hardware component" is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may comprise a special-purpose processor, such as an FPGA or an ASIC. A hardware component may also include programmable logic or circuitry that is temporarily configured by software to perform certain operations.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

Unless specifically stated otherwise, as apparent from the following discussion, it is appreciated that throughout the description, discussions utilizing terms such as "receiving", "determining", "comparing ", "enabling", "maintaining," "identifying," "obtaining," "detecting," "generating," "processing," or the like, refer to the actions and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

It will be understood that the above description of specific embodiments is by way of example only and is not intended to limit the scope of the present disclosure. Many modifications of the described embodiments, some of which are now described, are envisaged and intended to be within the scope of the present disclosure.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

Any system feature as described herein may also be provided as a method feature, and vice versa. As used herein, means plus function features may be expressed alternatively in terms of their corresponding structure.

Any feature in one aspect may be applied to other aspects, in any appropriate combination. In particular, method aspects may be applied to system aspects, and vice versa. Furthermore, any, some and/or all features in one aspect can be applied to any, some and/or all features in any other aspect, in any appropriate combination.

It should also be appreciated that particular combinations of the various features described and defined in any aspects can be implemented and/or supplied and/or used independently.

## Claims

1. A system comprising:
a network builder for generating a virtual network system within a first network container;
the first network container comprising the virtual network system, generated by the network builder and accessed via a browser interface, the virtual network system comprising two or more virtual end devices and two or more virtual intermediary network devices for receiving and sending data between the two or more virtual end devices;
an end user device comprising the browser interface and for receiving inputs from a user;
wherein the inputs from the user comprise at least one command for at least one virtual device of the virtual network system;
a performance monitoring module for monitoring the performance of the virtual network system;
an output device for outputting a score associated with the virtual network system based on the performance of the virtual network system.

2. The system according to claim 1, wherein the virtual intermediary network devices are virtual network switches, and/or virtual network routers, and/or virtual network storage devices.

3. The system according to claim 2, wherein each virtual network switch device is connected to one or more of the virtual end devices.

4. The system according to any preceding claim, further comprising a second virtual network system, and wherein the second virtual network system is generated within a second network container by the network.

5. The system according to any preceding claim, wherein the system further comprises a frame manager for processing a queue of frames generated by the virtual devices of the virtual network system.

6. The system according to any preceding claim, wherein the system further comprises a job queue for receiving instructions from the frame manager and delivering frames to at least one virtual device of the virtual network system.

7. The system according to any of claims 4 and 6, wherein the job queue is further configured to receive instructions from a second frame manager in the second network container, and deliver frames to at least one virtual device of the second virtual network system.

8. The system according to any preceding claim, further comprising a modular interface including at least one of: a command line interface and/or a graphical user interface for receiving user inputs.

9. The system according to claim 8, wherein the modular interface is accessed via the browser interface of the end user device.

10. The system according to any preceding claim, wherein the performance monitoring module is configured to determine latency of at least one of: the frame manager and/or the job queue, and wherein the performance is based on the latency.

11. The system according to any preceding claim, wherein the performance monitoring module is configured to determine the history of commands executed by the user, and wherein the performance is based on the history of commands.

12. The system according to any preceding claim, wherein the performance monitoring module is configured to determine granular configuration changes associated with at least one virtual network intermediary device or virtual network end device, and wherein the granular configuration changes comprise at least one of:
configured internet protocol, IP, addresses;
online ports;
offline ports;
configured routes;
configured virtual local area networks ,VLANs; and/ or
configured subnets;
and wherein the performance is based on the granular configuration changes.

13. The system according to any preceding claim, wherein the virtual network device comprises at least one characteristic, and wherein the characteristic is at least one of:
device name;
device medium access control, MAC, address;
a number of ports on the device;
network capabilities;
configured virtual local area networks, VLANs;
configured routes;
medium access control, MAC, address table; and/or
address resolution protocol, ARP, table.

14. The system according to claim 13, wherein the virtual network device comprises at least one virtual port, and wherein the at least one characteristic is at least one of:
a port number;
a port medium access control, MAC, address;
a port internet protocol, IP address; and/or
a port status.

15. The system according to any preceding claim, wherein the command comprises an instruction to change at least one characteristic of at least one virtual network device,

16. The system according to any preceding claim, wherein the performance monitoring module determines a transfer rate of data between the virtual ports and/or confirmed receipt of data at one or more virtual network devices, and wherein the performance is based on the transfer rate of data and/or confirmed receipt of data.

17. The system according to any preceding claim, wherein the performance monitoring module further comprises a grading module including a test scenario bank and a grading script.

18. The system according to any preceding claim, wherein the grading module further comprises a test scenario randomizer for applying random values to specified variables within the virtual network system.

19. A method of operating a system comprising:
a network builder for generating a virtual network system within a first network container;
the first network container comprising the virtual network system, generated by the network builder and accessed via a browser interface, the virtual network system comprising two or more virtual end devices and two or more virtual intermediary network devices for receiving and sending data between the two or more virtual end devices;
an end user device comprising the browser interface and for receiving inputs from a user;
wherein the inputs from the user comprise at least one command for at least one virtual device of the virtual network system;
a performance monitoring module for monitoring the performance of the virtual network system;
an output device for outputting a score associated with the virtual network system based on the performance of the virtual network system;
the method comprising:
receiving a request to generate the first network container comprising the virtual network system;
in response to receiving the request, generating, by the network builder, the first network container comprising the virtual network system.

20. The method of operating a system according to claims 19, the method further comprising:
receiving, at the end user device, an input from a user via the browser interface of the end user device, wherein the input comprises at least one command for at least one virtual device of a virtual network system;
monitoring, by the performance monitoring module, a performance of the virtual network system; and
outputting, by the outputting device, a score associated with the virtual network system based on the performance of the virtual network system.

21. A computer-readable medium capable of performing instructions according to claim 19 and/or 20.
